# EUROPEAN PATENT APPLICATION

(11) **EP 3 176 693 A1**
(43) Date of publication of application: **07.06.2017**
(21) Application number: 15842841.7
(22) Date of filing: 07.09.2015
(51) Int. Cl.: G06F 9/38, G06F 15/16

(54) **MULTICORE PROCESSOR CHIP-BASED DATA PROCESSING METHOD, DEVICE, AND SYSTEM**

(30) Priority: 15.09.2014 CN 201410468649; 21.10.2014 CN 201410563717
(71) Applicant: Huawei Technologies Co. Ltd., Shenzhen, Guangdong 518129 (CN)
(72) Inventor: ZHANG, Youhui, Beijing 100084 (CN); LI, Yanhua, Beijing 100084 (CN); SONG, Kunpeng, Shenzhen Guangdong 518129 (CN); WANG, Yuangang, Shenzhen Guangdong 518129 (CN)
(74) Representative: Kreuz, Georg Maria
(86) International application number: PCT/CN2015/089052
(87) International publication number: WO 2016/041447

(57) **Abstract**

A data processing method based on a multi-core processor chip, an apparatus, and a system are provided. The data processing method includes: obtaining, by a first processor core, a data processing task, where the data processing task includes a processing operation identifier and a storage address of to-be-processed data (202); determining, by the first processor core, a second processor core, where the second processor core corresponds to the storage address of the to-be-processed data (204); and sending, by the first processor core, the processing operation identifier and the storage address of the to-be-processed data to the second processor core (206). The data processing method is applied to a multi-core processor chip and improves working efficiency of the multi-core processor chip.

## Description

### TECHNICAL FIELD

The present invention relates to the field of computer technologies, and in particular, to a data processing method based on a multi-core processor chip, an apparatus, and a system.

### BACKGROUND

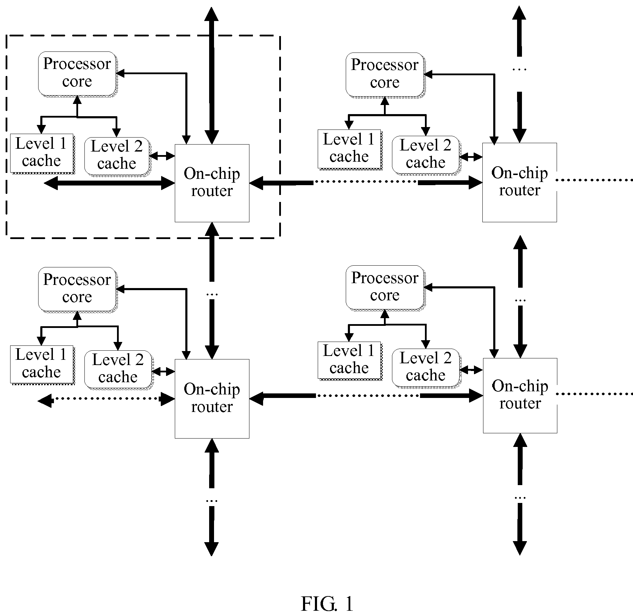

As computer architecture technologies develop, an architecture that integrates multiple cores (Multi-Core) or even many cores (Many Core) into a processor chip has gradually become a mainstream. A chip in such an architecture is known as a multi-core processor chip and also known as a chip multi-processor (Chip Multi-Processors, CMPs) chip. As shown in FIG. 1, an existing multi-core processor chip generally uses a non-uniformed cache architecture (Non-Uniformed Cache Architecture, NUCA). Specifically, each processor core (Core) privately owns a level 1 cache (Level 1 cache) while all processor cores of the multi-core processor chip logically share level 2 caches (Level 2 cache). A level 1 cache privately owned by each processor core generally includes a level 1 data cache and a level 1 instruction cache that store mainly part of to-be-processed data and operation instructions when a processor core corresponding to the level 1 cache is running. Data to be processed by the multi-core processor chip is mainly stored in the level 2 caches, and therefore a total capacity of the level 2 caches is relatively large. Physically, the level 2 caches are distributed around the processor cores of the entire multi-core processor chip, and are interconnected through a network on chip (Network on Chip, NoC). Generally, each processor core corresponds to one level 2 cache. Similarly, a chip random access memory (Random Access Memory, RAM) may be used to replace a level 2 cache.

Corresponding to the multi-core processor chip architecture, when a multi-core processor chip runs an application, the application is usually divided into multiple threads and distributed to multiple processor cores of the multi-core processor chip for parallel execution. Interaction between the multiple processor cores is insufficient in the running process, affecting running efficiency of the multi-core processor chip.

### SUMMARY

The present invention is put forward for the foregoing prior art. With the present invention, impact on processing efficiency due to insufficient interaction during parallel processing of an application by multiple processor cores of a multi-core processor chip in the prior-art technical solution can be overcome.

A first aspect of embodiments of the present invention provides a data processing method based on a multi-core processor chip, where the multi-core processor chip includes at least a first processor core and a second processor core, and the data processing method includes: obtaining, by the first processor core, a data processing task, where the data processing task includes a processing operation identifier and a storage address of to-be-processed data; determining, by the first processor core, the second processor core, where the second processor core corresponds to the storage address of the to-be-processed data, and the determining the second processor core is obtaining an identifier of the second processor core; and sending, by the first processor core, the processing operation identifier and the storage address of the to-be-processed data to the second processor core, which is encapsulating the identifier of the second processor core, the processing operation identifier, and the storage address of the to-be-processed data into a data packet and sending the data packet to an on-chip router; and routing, by the on-chip router, the data packet to the second processor core according to the identifier of the second processor core in the data packet after the on-chip router obtains the data packet. The data processing task may further include execution sequence information, instructing the second processor core to complete the data processing task in an execution sequence indicated by the execution sequence information. The data processing task may further include execution times information, instructing the second processor core to complete the data processing task according to a quantity of execution times indicated by the execution quantity information.

With reference to the first aspect, in a first implementation manner of the first aspect, the obtaining, by the first processor core, an identifier of the second processor core specifically includes determining, by the first processor core, the second processor core, where the second processor core corresponds to the storage address of the to-be-processed data, which specifically includes querying, by the first processor core, a data storage table according to the storage address of the to-be-processed data to determine the second processor core, where the data storage table includes a correspondence between the storage address of the to-be-processed data and the identifier of the second processor core.

With reference to the first aspect, in a second implementation manner of the first aspect, the determining, by the first processor core, the second processor core, where the second processor core corresponds to the storage address of the to-be-processed data specifically includes determining, by the first processor core, the second processor core according to a workload parameter of the first processor core and a workload parameter of the second processor core, and recording a correspondence between the storage address of the to-be-processed data and the identifier of the second processor core in the data storage table.

With reference to the first aspect, in a third implementation manner of the first aspect, the determining, by the first processor core, the second processor core, where the second processor core corresponds to the storage address of the to-be-processed data specifically includes querying, by the first processor core, a data storage table according to the storage address of the to-be-processed data; and if a correspondence between the storage address of the to-be-processed data and the identifier of the second processor core is found, determining, by the first processor core, the second processor core according to the correspondence; or if a correspondence between the storage address of the to-be-processed data and the identifier of the second processor core is not found, determining, by the first processor core, the second processor core according to a workload parameter of the first processor core and a workload parameter of the second processor core, and recording the correspondence between the storage address of the to-be-processed data and the identifier of the second processor core in the data storage table.

With reference to the second or the third implementation manner of the first aspect, in a fourth implementation manner of the first aspect, the correspondence between the storage address of the to-be-processed data and the identifier of the second processor core is deleted from the data storage table if the workload parameter of the second processor core exceeds a preset threshold.

With reference to the first, the second, the third, or the fourth implementation manner of the first aspect, in a fifth implementation manner of the first aspect, after the sending, by the first processor core, the processing operation identifier and the storage address of the to-be-processed data to the second processor core, the method further includes: obtaining, by the second processor core, the processing operation identifier and the storage address of the to-be-processed data, determining a processing operation according to the processing operation identifier, and obtaining the to-be-processed data according to the storage address of the to-be-processed data; and processing, by the second processor core, the to-be-processed data according to the processing operation. If the data processing task includes the execution sequence information, the second processor core further processes the to-be-processed data according to the execution sequence information. If the data processing task includes the execution times information, the second processor core further processes the to-be-processed data according to the execution times information. After processing the to-be-processed data, the second processor core may further send a notification to the first processor core, or return a processing result to the first processor core.

A second aspect of the embodiments of the present invention provides a data processing apparatus, including: an obtaining unit, configured to obtain a data processing task, where the data processing task includes a processing operation identifier and a storage address of to-be-processed data; a determining unit, configured to determine a processor core, where the processor core corresponds to the storage address of the to-be-processed data; and a sending unit, configured to send the processing operation identifier and the storage address of the to-be-processed data to the processor core.

With reference to the second aspect, in a first implementation manner of the second aspect, the determining unit is specifically configured to query a data storage table according to the storage address of the to-be-processed data to determine the processor core, where the data storage table includes a correspondence between the storage address of the to-be-processed data and an identifier of the processor core.

With reference to the second aspect, in a second implementation manner of the second aspect, the determining unit is further configured to determine the processor core according to a workload parameter of the data processing apparatus and a workload parameter of the processor core and record a correspondence between the storage address of the to-be-processed data and an identifier of the processor core in the data storage table.

With reference to the second aspect, in a third implementation manner of the second aspect, the determining unit is further configured to query a data storage table according to the storage address of the to-be-processed data; and if a correspondence between the storage address of the to-be-processed data and an identifier of the processor core is found, determine the processor core according to the correspondence; or if a correspondence between the storage address of the to-be-processed data and an identifier of the processor core is not found, determine the processor core according to a workload parameter of the data processing apparatus and a workload parameter of the processor core, and record the correspondence between the storage address of the to-be-processed data and the identifier of the processor core in the data storage table.

With reference to the second or the third implementation manner of the second aspect, in a fourth implementation manner of the second aspect, the data processing apparatus further includes a deleting unit, where the deleting unit is configured to delete the correspondence between the storage address of the to-be-processed data and the identifier of the processor core from the data storage table if the workload parameter of the processor core exceeds a preset threshold.

A third aspect of the embodiments of the present invention provides a multi-core processor chip, where the multi-core processor chip includes at least a first processor core and a second processor core, and the first processor core is in communication connection with the second processor core, where
the first processor core is configured to: obtain a data processing task, where the data processing task includes a processing operation identifier and a storage address of to-be-processed data; determine the second processor core, where the second processor core corresponds to the storage address of the to-be-processed data; and send the processing operation identifier and the storage address of the to-be-processed data to the second processor core; and
the second processor core is configured to obtain the processing operation identifier and the storage address of the to-be-processed data, determine a processing operation according to the processing operation identifier, obtain the to-be-processed data according to the storage address of the to-be-processed data, and process the to-be-processed data according to the processing operation.

With reference to the third aspect, in a first implementation of the third aspect, the multi-core processor chip further includes a memory, where the memory is configured to store a data storage table, and the memory is in communication connection with the first processor core and the second processor core; and that the first processor core determines the second processor core, where the second processor core corresponds to the storage address of the to-be-processed data specifically includes querying, by the first processor core, the data storage table according to the storage address of the to-be-processed data to determine the second processor core, where the data storage table includes a correspondence between the storage address of the to-be-processed data and an identifier of the second processor core.

With reference to the third aspect, in a second implementation manner of the third aspect, that the first processor core determines the second processor core, where the second processor core corresponds to the storage address of the to-be-processed data specifically includes determining, by the first processor core, the second processor core according to a workload parameter of the first processor core and a workload parameter of the second processor core, and recording a correspondence between the storage address of the to-be-processed data and an identifier of the second processor core in the data storage table.

With reference to the third aspect, in a third implementation manner of the third aspect, the multi-core processor chip further includes a memory, where the memory is configured to store a data storage table, and the memory is in communication connection with the first processor core and the second processor core; and that the first processor core determines the second processor core, where the second processor core corresponds to the storage address of the to-be-processed data specifically includes querying, by the first processor core, the data storage table according to the storage address of the to-be-processed data; and if a correspondence between the storage address of the to-be-processed data and an identifier of the second processor core is found, determining, by the first processor core, the second processor core according to the correspondence; or if a correspondence between the storage address of the to-be-processed data and an identifier of the second processor core is not found, determining, by the first processor core, the second processor core according to a workload parameter of the first processor core and a workload parameter of the second processor core, and recording the correspondence between the storage address of the to-be-processed data and the identifier of the second processor core in the data storage table.

With reference to the second or the third implementation manner of the third aspect, in a fourth implementation manner of the third aspect, the second processor core is further configured to delete the correspondence between the second processor core and the storage address of the to-be-processed data from the data storage table if the workload parameter of the second processor core exceeds a preset threshold.

A fourth aspect of the embodiments of the present invention provides a computer system, where the computer system includes the multi-core processor chip described in the third aspect of the present invention, a memory, a communications interface, and a bus, where the multi-core processor chip, the memory, and the communications interface are connected by using the bus.

The embodiments of the present invention provide a data processing method based on a multi-core processor chip, an apparatus, a multi-core processor chip, and a computer system. A first processor core of the multi-core processor chip can send a received data processing task to a second processor core corresponding to the data processing task, so that the data processing task is transferred from the first processor core to the second processor core for execution, which achieves interaction about the data processing task between processor cores, and therefore improves efficiency of the multi-core processor chip in processing an application.

### BRIEF DESCRIPTION OF DRAWINGS

To describe the technical solutions in the embodiments of the present invention or in the prior art more clearly, the following briefly describes the accompanying drawings required for the embodiments. Apparently, the accompanying drawings in the following description show some embodiments of the present invention, and a person of ordinary skill in the art may still derive other drawings from these accompanying drawings without creative efforts.
FIG. 1 is a schematic diagram of an architecture of a multi-core processor chip applied in an embodiment of the present invention;
FIG. 2 is a schematic flowchart of a data processing method applied in Method Embodiment 1 of the present invention;
FIG. 3 is a partial schematic flowchart of a data processing method applied in Method Embodiment 1 of the present invention;

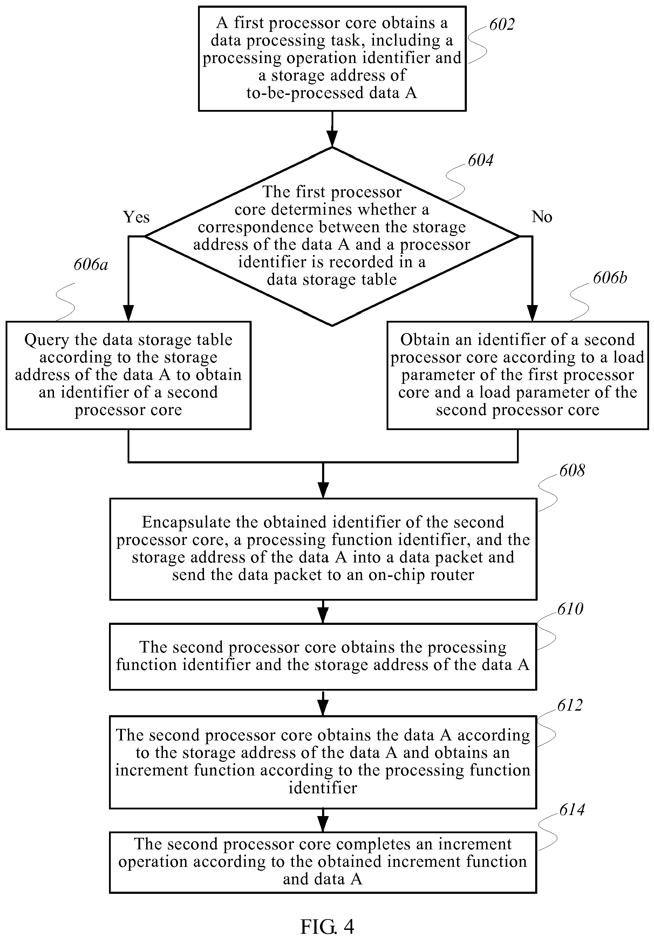

FIG. 4 is a schematic flowchart of a data processing method applied in Method Embodiment 2 of the present invention;
FIG. 5 is a schematic structural diagram of composition of a data processing apparatus applied in an apparatus embodiment of the present invention;
FIG. 6 is a schematic structural diagram of composition of a multi-core processor chip applied in a device embodiment of the present invention; and
FIG. 7 is a schematic structural diagram of composition of a computer system applied in a system embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The term "processor core" in this specification generally refers to one or multiple processing units that execute a data processing task on a multi-core processor chip, also known as a processor core or a processing core, or it may be an integrated circuit chip that has a capability of processing signals, for example, a universal processor, a digital signal processor (Digital Signal Processor, DSP), an application-specific integrated circuit (Application Specific Integrated Circuit, ASIC), or a field programmable gate array (Field Programmable Gate Array, FPGA). It should be noted that a first processor core and a second processor core in the embodiments of the specification may be any one or more processor cores of a multi-core processor chip, and naming of the processor cores is not limited.

The term "to-be-processed data" in this specification is not limited to referring to a piece of to-be-processed data in a data processing task, but may refer to multiple pieces of to-be-processed data. "Data" in this specification includes common data representation forms in the field of computer technologies, for example, a number, a table, a queue, and a base. "Processing operations" in this specification include common data processing functions in the field of computer technologies, for example, four arithmetic operations, graph traverse, and array sequencing. A "processing operation" may be a program segment that implements a fixed computation function.

The term "level 2 cache" in this specification generally refers to temporary memories that can be accessed logically by all processor cores on a multi-core processor chip and that are physically distributed around the processor cores. It should be noted that a level 2 cache in the embodiments of this specification may also be an on-chip RAM. Whether a level 2 cache or an on-chip RAM is used is specifically determined by a structure of a multi-core processor chip in actual use, and naming of the level 2 cache is not limited.

In the term "the second processor core corresponds to the storage address of the to-be-processed data" in this specification, the correspondence includes a case in which the to-be-processed data is stored in a level 2 cache of the second processor core as well as a case in which the to-be-processed data is stored in a level 2 cache of another processor core but there is a correspondence between the second processor core and the to-be-processed data.

### Architecture of a Multi-Core Processor Chip in an Embodiment of the Present Invention

FIG. 1 is a schematic diagram of a part of an architecture of a multi-core processor chip provided in an embodiment of the present invention. It can be understood by persons skilled in the art that FIG. 1 is a part of an architecture of a multi-core processor chip. An architecture of a multi-core processor chip in practice may be formed by means of extension by using a plurality of the part shown in FIG. 1 (in FIG. 1, what an ellipsis represents is one or more what is enclosed in a dashed-line box). Each processor of a multi-core processor chip corresponds to a level 1 cache, a level 2 cache, and an on-chip router. The level 1 cache is privately owned by each processor core, that is, only a processor core corresponding to a level 1 cache can access the level 1 cache. Generally, a level 1 cache may be classified into a level 1 data cache (Data Cache, D-Cache for short) and a level 1 instruction cache (Instruction Cache, I-Cache for short). These two caches are respectively used to store most frequently used data and instructions for processing data in a processor core, and can be accessed by the processor core at the same time. Level 2 caches are distributed around on-chip routers of an entire multi-core processor chip, and can communicate with the on-chip routers. Therefore, a processor core of a multi-core processor chip may access any level 2 cache by using a network on chip, that is, the level 2 caches of the multi-core processor chip are shared by all processor cores. Each processor core correspondingly connects to an on-chip router and communicates with another processor core or with a level 2 cache corresponding to another processor core by using the on-chip router. The on-chip routers ensure communication between the processor cores and the level 2 caches of the multi-core processor chip. In this way, the network on chip is formed.

### Method Embodiment 1

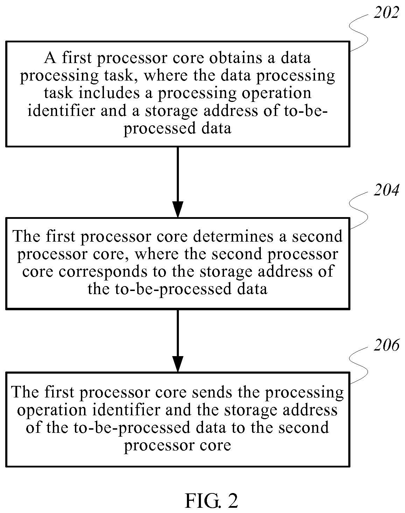

Referring to FIG. 2, Method Embodiment 1 is a data processing method provided based on the multi-core processor chip shown in FIG. 1. The multi-core processor chip includes at least a first processor core and a second processor core, and a processing process thereof includes:
Step 202: The first processor core obtains a data processing task, where the data processing task includes a processing operation identifier and a storage address of to-be-processed data.

Specifically, the processing operation identifier obtained by the first processor core is used to indicate a processing operation of the data processing task, and the processing operation identifier may be a number or a symbol. A specific implementation manner for the identifier is not limited. The to-be-processed data is stored in a level 2 cache of the multi-core processor chip, that is, the storage address of the to-be-processed data may point to any level 2 cache of the multi-core processor chip.

Specifically, the storage address of the to-be-processed data obtained by the first processor core has different representation forms according to storage modes for the to-be-processed data:
(1) When the to-be-processed data is stored in a consecutive mode, the storage address of the to-be-processed data has two representation forms: a start storage address of the to-be-processed data and a data length of the to-be-processed data; or a start storage address and an end storage address of the to-be-processed data.
(2) When the to-be-processed data is stored in an inconsecutive mode, the storage address of the to-be-processed data is an address of the to-be-processed data. It may be understood that data storage modes are diversified and a representation form used in practice is not limited to the modes described above.

Step 204: The first processor core determines a second processor core, where the second processor core corresponds to the storage address of the to-be-processed data.

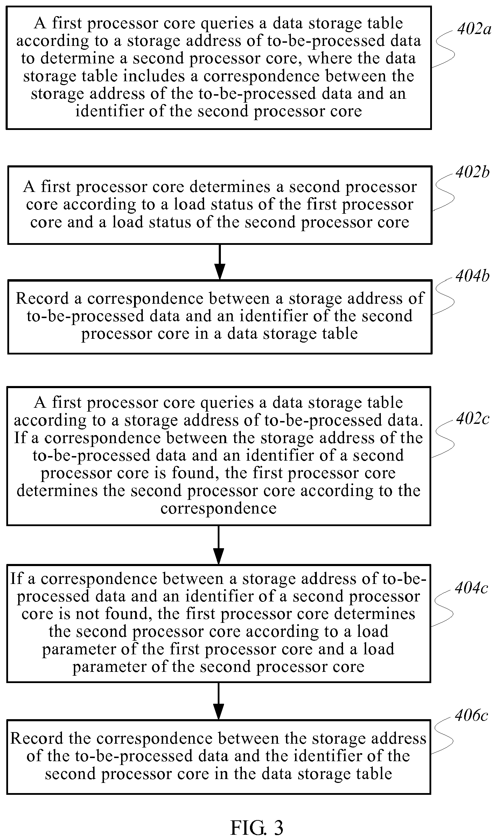

Optionally, step 204 may be completed by using the following three solutions, as shown in FIG. 3.
A. First solution. Step 402a: The first processor core queries a data storage table according to the storage address of the to-be-processed data to determine the second processor core. The data storage table includes a correspondence between the storage address of the to-be-processed data and an identifier of the second processor core.
Specifically, the first processor core queries the data storage table according to the storage address of the to-be-processed data obtained in step 202 to obtain the identifier of the second processor core, that is, to determine the second processor core. The identifier of the second processor core is used to indicate the second processor core. The data storage table includes a mapping relationship between processor core identifiers and storage addresses of to-be-processed data, as detailed in Table 1.

**Table 1**

| Storage address | Processor core identifier |
|---|---|
| 0000-00FF | 3 |
| 0100-01FF | 4 |

Specifically, the processor core identifier may be a preset symbol or number, and a specific implementation manner for the identifier is not limited. A mapping relationship exists between the processor core identifiers and the processor cores, so that an on-chip router, after obtaining a processor core identifier from a data packet, can route, according to the mapping relationship, the data packet to a processor core corresponding to the processor core identifier.
The storage address in the foregoing data storage table is a storage address of to-be-processed data. Different processor core identifiers indicate different processor cores. The processor core is determined at the same time when the processor core identifier is obtained. It might be assumed that, in Table 1, an identifier 3 indicates a processor core 3 and an identifier 4 indicates a processor core 4. For example, if the storage address of the to-be-processed data obtained in step 202 is a start storage address 000F and an end storage address 001F, the first processor core in step 204 determines the processor core 3 after querying Table 1. The processor core 3 is the second processor core in step 202. In practice, establishment and allocation of the data storage table may be implemented before the first processor core obtains the data processing task in step 202. The data storage table may alternatively be a data storage base. A specific implementation manner for the data storage table is not limited. It should be noted that the data storage table may be distributed as that the data storage table is privately owned by a respective processor core, that is, each processor core maintains one data storage table. In this case, when the data storage table for each processor core is modified, broadcasting is required to synchronize all data storage tables, and details of the broadcasting are not described herein.
Optionally, the mapping relationship in the data storage table is a mapping relationship between a storage address of a level 2 cache corresponding to a processor core and an identifier of the processor core. Table 1 is still used as an example. In this case, a storage address of a level 2 cache corresponding to the processor core 3 is 0000-00FF, and a storage address of a level 2 cache corresponding to the processor core 4 is 0100-01FF. In the foregoing example, the to-be-processed data has the start storage address 000F and the end storage address 001F, and therefore, the to-be-processed-data is stored in the level 2 cache corresponding to the processor core 3, and in step 204, the first processor core determines the processor core 3. Therefore, in subsequent steps, when executing the data processing task, the processor core 3 can read or write the to-be-processed-data directly from or to the level 2 cache corresponding to the processor core 3, without needing to remotely access another memory, thereby avoiding congestion of the network on chip caused by remote data reading and writing.
B. Second solution. Step 402b: The first processor core determines the second processor core according to a workload parameter of the first processor core and a workload parameter of the second processor core. Step 404b: Record a correspondence between the storage address of the to-be-processed data and an identifier of the second processor core in a data storage table.
Specifically, the first processor core performs determining comprehensively according to the workload parameter of the first processor core and the workload parameter of the second processor core. This parameter may be a parameter representing a workload status of a processor core, such as a percentage of a maximum workload or working power of the processor core. For example, if currently, the second processor core is idle but the first processor core is busy, the first processor core determines that the data processing task is to be executed by the second processor core; or if currently, the first processor core is busy (for example, a workload of the first processor core exceeds a specified threshold or exceeds a specified proportion of the maximum workload) and multiple processor cores are idle, the first processor core chooses one of the idle processor cores as the second processor core. The first processor core determines the second processor core and records the correspondence between the storage address of the to-be-processed data and the identifier of the second processor core in the data storage table, so that any processor core of the multi-core processor chip can determine , , by querying the data storage table, that the storage address of the to-be-processed data corresponds to the second processor core after receiving the storage address of the to-be-processed data. In practice, the data storage table may be established before step 204. That is, the data storage table is in existence before step 204 and is not edited until step 204. Alternatively, the data storage table may be established in step 204. That is, after determining the second processor core, the first processor core establishes the data storage table and records the correspondence between the storage address of the to-be-processed data and the identifier of the second processor core in the data storage table.
C. Third solution. Step 402c: The first processor core queries a data storage table according to the storage address of the to-be-processed data. If a correspondence between the storage address of the to-be-processed data and an identifier of the second processor core is found, the first processor core determines the second processor core according to the correspondence;

Step 404c: If a correspondence between the storage address of the to-be-processed data and an identifier of the second processor core is not found, the first processor core determines the second processor core according to a workload parameter of the first processor core and a workload parameter of the second processor core.

Step 406c: Record the correspondence between the storage address of the to-be-processed data and the identifier of the second processor core in the data storage table.

Specifically, in the third solution, the first processor core queries the data storage table according to the storage address of the to-be-processed data. If the correspondence between the storage address of the to-be-processed data and the identifier of the second processor core is found, specific details are similar to those in the first solution. If the correspondence between the storage address of the to-be-processed data and the identifier of the second processor core is not found, specific details are similar to those in the second solution. No further description is provided herein.

In a case in which step 204 is implemented by using the second or the third solution, the data processing method may further include: deleting the correspondence between the storage address of the to-be-processed data and the identifier of the second processor core from the data storage table if the workload parameter of the second processor core exceeds a preset threshold.

Specifically, in a case in which the second processor core is determined by using the workload parameter, when the workload parameter exceeds the preset threshold because workload on the second processor core is excessively heavy, workload, the correspondence between the storage address of the to-be-processed data and the identifier of the second processor core may be actively deleted from the data storage table by the second processor core. In this way, other processor cores cannot find the identifier of the second processor core in the data storage table after receiving the storage address of the to-be-processed data. Therefore, a new processor core needs to be determined according to the workload parameter, and a purpose of workload balancing among multiple processor cores is achieved.

Step 206: The first processor core sends the processing operation identifier and the storage address of the to-be-processed data to the second processor core.

Specifically, the first processor core may encapsulate the identifier of the second processor core, the processing operation identifier, and the storage address of the to-be-processed data that are obtained in step 204 into a data packet and send the data packet to the network on chip. An on-chip router on the network on chip routes the data packet to the second processor core, based on a preset routing table and according to the identifier of the second processor core carried in the data packet. There may be various composition manners for the data packet, and sequencing for components of the data packet is not limited. Table 2 shows a possible composition of the data packet.

**Table 2**

| Processor core identifier | Processing operation identifier | Storage address of to-be-processed data |
|---|---|---|
| 3 | 10 | 000F, 001F |

After step 206 is performed, the second processor core receives the data packet, obtains the processing operation identifier and the storage address of the to-be-processed data, and queries a function table according to the processing operation identifier to obtain a processing operation. The function table includes a mapping relationship between processing operation identifiers and processing operations, as listed in Table 3. The second processor obtains the to-be-processed data according to the storage address of the to-be-processed data and completes processing for the to-be-processed data according to the obtained processing operation and the to-be-processed data.

**Table 3**

| Processing operation identifier | Processing operation |
|---|---|
| 1 | Add operation |
| 2 | Multiply operation |
| ... | ... |
| 10 | Increment operation |

It should be noted that, after step 206 is performed, a process of completing the processing operation on the to-be-processed data by the second processor core may be executed by a data packet processing thread running on the second processor core or by a data packet processing module of the second processor core. In a case of execution by the data packet processing thread, the data packet processing thread listens to and receives the data packet transmitted from the network on chip to the second processor core and completes the processing for the to-be-processed data according to the obtained data packet. In a case of execution by the data packet processing module, the data packet transmitted from the network on chip to the second processor core is received and processed by the data packet processing module. When the data packet processing module is processing the to-be-processed data, another processing module of the second processor core may further execute another data processing task to improve working efficiency. The data packet processing module and the another processing module of the second processor core share a level 2 cache corresponding to the second processor core, and both may communicate with other processor cores or other level 2 caches of the multi-core processor chip by using the network on chip.

The foregoing provides an embodiment of a data processing method based on a multi-core processor chip. When receiving a data processing task, a processor core determines a processor core corresponding to a storage address of to-be-processed data in the data processing task, and sends relevant information about the data processing task to the processor core. In this way, processor cores of the multi-core processor chip can interact with each other about a data processing task, and working efficiency of the multi-core processor chip is improved. In addition, in this method embodiment, a sending destination is the processor core corresponding to the storage address of the to-be-processed data in the data processing task. Therefore, a situation in which multiple processor cores contend for accessing a given piece of data when executing a data processing task is eliminated. In this way, when accessing data, the processor core does not need to perform operations such as reading lock-status, locking, and unlocking, which avoids overheads caused by lock operations and therefore improves efficiency of the multi-core processor chip in processing an application.

### Method Embodiment 2

Referring to FIG. 3, based on the multi-core processor chip architecture shown in FIG. 1, Method Embodiment 2 provides a detailed process of an increment operation for data A by using the data processing method provided in Method Embodiment 1.

An application running on the multi-core processor chip is divided into multiple data processing tasks and distributed to multiple processor cores for parallel computation. Threads for processing the foregoing data processing tasks running on the multiple processor cores need to perform increment operations on the data A. The increment operation means that each operation makes a value of the data A increase by 1, where the data A is stored in a level 2 cache of the multi-core processor chip. Because the foregoing multiple threads run concurrently, a situation may occur that the foregoing multiple threads contend for accessing the data A at a same time. Therefore, atomicity needs to be ensured for the increment operations on the data A, which means ensuring that at most one thread can access the data A at a same time.

The following uses an example in which a data processing task obtained by a first processor core requires an increment operation on data A to illustrate in detail steps of performing an increment operation on the data A by using the technical solution provided in the present invention.

Step 602: The first processor core obtains the data processing task. The data processing task includes a processing operation identifier 10 and a storage address 000F-001F of the to-be-processed data A. The identifier is the processing operation identifier in Method Embodiment 1, and the storage address of the to-be-processed data is the storage address of the to-be-processed data in Method Embodiment 1.

Step 604: The first processor core queries a data storage table according to the storage address of the data A to determine whether a correspondence between the storage address of the data A and a processor identifier is recorded in the data storage table.

If a correspondence between the storage address of the data A and a processor identifier is recorded in the data storage table, step 606a is performed. That is, the first processor core queries the data storage table according to the storage address of the data A to obtain a processor core identifier 3.

Specifically, the data storage table (listed in Table 1) records that the storage address 000F-001F corresponds to the processor core identifier 3. In a special case, if the identifier 3 indicates the first processor core, the first processor core obtains the data A according to the storage address 000F-001F of the data A, queries a function table (listed in Table 3) according to a function identifier 10 of the data A to obtain an increment function. The first processor core completes an increment operation on the data A according to the data A and the increment function.

If a correspondence between the storage address of the data A and a processor identifier is not recorded in the data storage table, step 606b is performed. That is, the first processor core determines, according to a workload parameter of the first processor core and a workload parameter of a second processor core, that an increment operation on the data A is to be performed by the second processor core, obtains an identifier 3 of the second processor core, and records a correspondence between the identifier 3 of the second processor core and the storage address of the data A into the data storage table.

It should be noted that step 606a or step 606b may be directly performed after step 602. For a detailed implementation manner, refer to step 402a or steps 402b to 404b in Method Embodiment 1. Details are not described again.

Step 608: The first processor core encapsulates the obtained processor core identifier 3, the processing operation identifier 10, and the storage address 000F-001F of the data A into a data packet, as listed in Table 4, and sends the data packet to a network on chip. An on-chip router on the network on chip routes the data packet to the second processor core corresponding to the processor core identifier 3, based on a preset routing table and according to the processor core identifier 3 carried in the data packet.

**Table 4**

| Processor core identifier | Processing operation identifier | Storage address of to-be-processed data |
|---|---|---|
| 3 | 10 | 000F, 001F |

Step 610: The processor core corresponding to the processor core identifier 3, that is the second processor core, receives the data packet and obtains the processing operation identifier 10 and the storage address 000F-001F of the data A from the data packet.

Step 612: The second processor core reads the data A according to the storage address 000F-001F of the data A, and queries a function table according to the processing operation identifier 10 to obtain an increment function. The function table is listed in Table 3, and is not further described herein.

Step 614: The second processor core completes an increment operation according to the obtained increment function and the data A.

Optionally, the following two operations may be performed after step 614.

First operation: After completing the increment operation, the second processor core sends a processing result of the increment operation to the first processor core. For example, data related to multiple data processing tasks running on the first processor core corresponds to multiple processor cores. The first processor core then distributes the multiple data processing tasks to the multiple processor cores respectively and receives processing results of the multiple processor cores for consequent data processing.

Second operation: After completing the increment operation, the second processor core notifies the first processor core that processing of the increment operation is completed. For example, a data processing task received by the first processor core after the data packet is sent in step 608 needs to be executed after that the second processor core has completed the increment operation is confirmed. In this case, after completing the increment operation, the second processor core needs to notify the first processor core that the increment operation is completed.

### Apparatus Embodiment

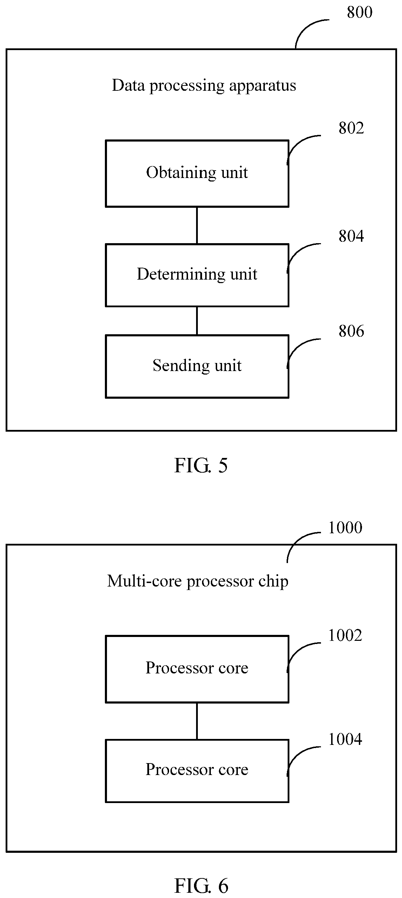

The present invention further provides an embodiment of a data processing apparatus. As shown in FIG. 5, the data processing apparatus 800 includes:
an obtaining unit 802, configured to obtain a data processing task, where the data processing task includes a processing operation identifier and a storage address of to-be-processed data;
a determining unit 804, configured to determine a processor core, where the processor core corresponds to the storage address of the to-be-processed data; and
a sending unit 806, configured to send the processing operation identifier and the storage address of the to-be-processed data to the processor core.

Optionally, the determining unit 804 is specifically configured to query a data storage table according to the storage address of the to-be-processed data to determine the processor core. The data storage table includes a correspondence between the storage address of the to-be-processed data and an identifier of the processor core.

Optionally, the determining unit 804 is specifically configured to determine the processor core according to a workload parameter of the data processing apparatus and a workload parameter of the processor core, and record the correspondence between the storage address of the to-be-processed data and an identifier of the processor core in a data storage table.

Optionally, the determining unit 804 is specifically configured to query a data storage table according to the storage address of the to-be-processed data; and if a correspondence between the storage address of the to-be-processed data and an identifier of the processor core is found, determine the processor core according to the correspondence; or if a correspondence between the storage address of the to-be-processed data and an identifier of the processor core is not found, determine the processor core according to a workload parameter of the data processing apparatus and a workload parameter of the processor core, and record the correspondence between the storage address of the to-be-processed data and the identifier of the processor core in the data storage table.

Optionally, the data processing apparatus 800 further includes a deleting unit. The deleting unit is configured to delete the correspondence between the storage address of the to-be-processed data and the identifier of the processor core from the data storage table if the workload parameter of the processor core exceeds a preset workload parameter.

It should be noted that the data processing apparatus 800 may be any processor core of the multi-core processor chip shown in FIG. 1.

The foregoing provides an embodiment of a data processing apparatus based on a multi-core processor chip. When receiving a data processing task, the processing apparatus determines a processor core corresponding to the data processing task, and sends relevant information about the data processing task to the processor core. In this way, the data processing apparatus can interact with another processor core of the multi-core processor chip about a data processing task, and working efficiency of the multi-core processor chip is improved. In addition, in this method embodiment, a sending destination is the processor core corresponding to the storage address of the to-be-processed data in the data processing task. Therefore, a situation in which multiple processor cores contend for accessing a given piece of data when executing a data processing task is eliminated. In this way, when accessing data, the processor core does not need to perform operations such as reading lock-status, locking, and unlocking, which avoids overheads caused by lock operations and therefore improves efficiency of the multi-core processor chip in processing an application.

### Device Embodiment

FIG. 6 is a schematic structural diagram of composition of a multi-core processor chip 1000 in a device embodiment of the present invention. Specifically, the multi-core processor chip 1000 may refer to a part or an entirety of the multi-core processor chip shown in FIG. 1. The multi-core processor chip 1000 includes at least a processor core 1002 and a processor core 1004. The processor core 1002 and the processor core 1004 communicate with each other by using at least one on-chip router.

Specifically, the processor core 1002 is configured to execute step 202, step 204, step 206, and optional solutions thereof in Method Embodiment 1.

Specifically, the processor core 1004 is configured to obtain a processing operation identifier and a storage address of to-be-processed data, determine a processing operation according to the processing operation identifier, obtain to-be-processed data according to the storage address of the to-be-processed data, and process the to-be-processed data according to the processing operation.

The foregoing provides an embodiment of a multi-core processor chip. When receiving a data processing task, the multi-core processor chip determines a processor core corresponding to a storage address of to-be-processed data in the data processing task, and sends relevant information about the data processing task to the processor core. In this way, processor cores of the multi-core processor chip can interact with each other about a data processing task, and working efficiency of the multi-core processor chip is improved. In addition, in this method embodiment, a sending destination is the processor core corresponding to the storage address of the to-be-processed data in the data processing task. Therefore, a situation in which multiple processor cores contend for accessing a given piece of data when executing a data processing task is eliminated. In this way, when accessing data, the processor core does not need to perform operations such as reading lock-status, locking, and unlocking, which avoids overheads caused by lock operations and therefore improves efficiency of the multi-core processor chip in processing an application.

### System Embodiment

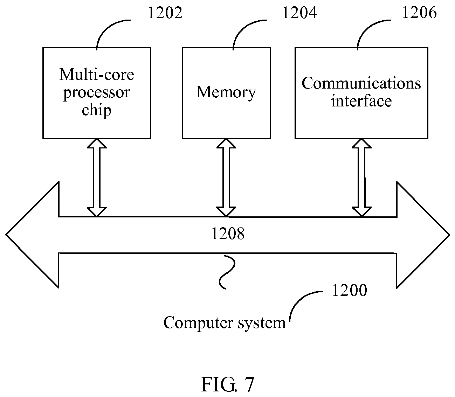

FIG. 7 is a schematic structural diagram of composition of a computer system 1200 in a system embodiment of the present invention. Specifically, the computer system includes a multi-core processor chip 1202 described in the device embodiment, a memory 1204, a communications interface 1206, and a bus 1208. The multi-core processor chip 1202, the memory 1204, and the communications interface 1206 communicate by using the bus 1208, and the communications interface 1206 is configured to communicate with an external device. In specific implementation, when the computer system 1200 is running, in a process of processing a data processing task by the multi-core processor chip 1202, the method described in the foregoing Method Embodiment 1 or Method Embodiment 2 is executed.

The foregoing provides an embodiment of a computer system. When the computer system is running, an installed multi-core processor chip determines, after receiving a data processing task, a processor core corresponding to a storage address of to-be-processed data in the data processing task, and sends relevant information about the data processing task to the processor core. In this way, processor cores of the multi-core processor chip can interact with each other about a data processing task, and working efficiency of the multi-core processor chip and the computer system is improved. In addition, in this method embodiment, a sending destination is the processor core corresponding to the storage address of the to-be-processed data in the data processing task. Therefore, a situation in which multiple processor cores contend for accessing a given piece of data when executing a data processing task is eliminated. In this way, when accessing data, the processor core does not need to perform operations such as reading lock-status, locking, and unlocking, which avoids overheads caused by lock operations and therefore improves efficiency of the multi-core processor chip in processing an application.

It should be noted that, for ease of description, the foregoing method embodiments are described as a combination of a series of actions. However, a person skilled in the art should understand that the present invention is not limited to the described sequence of the actions, because some steps may be performed in another sequence or performed at the same time according to the present invention. In addition, a person skilled in the art should also appreciate that all the embodiments described in the specification are exemplary embodiments, and the actions and modules involved are not necessarily mandatory to the present invention.

In the foregoing embodiments, the description of each embodiment has a respective focus. For a part that is not described in detail in an embodiment, reference may be made to related descriptions in other embodiments.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A data processing method based on a multi-core processor chip, wherein the multi-core processor chip comprises at least a first processor core and a second processor core, and the data processing method comprises:
obtaining, by the first processor core, a data processing task, wherein the data processing task comprises a processing operation identifier and a storage address of to-be-processed data;
determining, by the first processor core, the second processor core, wherein the second processor core corresponds to the storage address of the to-be-processed data; and
sending, by the first processor core, the processing operation identifier and the storage address of the to-be-processed data to the second processor core.

2. The data processing method according to claim 1, wherein the determining, by the first processor core, the second processor core, wherein the second processor core corresponds to the storage address of the to-be-processed data specifically comprises:
querying, by the first processor core, a data storage table according to the storage address of the to-be-processed data to determine the second processor core, wherein the data storage table comprises a correspondence between the storage address of the to-be-processed data and an identifier of the second processor core.

3. The data processing method according to claim 1, wherein the determining, by the first processor core, the second processor core, wherein the second processor core corresponds to the storage address of the to-be-processed data specifically comprises:
determining, by the first processor core, the second processor core according to a workload parameter of the first processor core and a workload parameter of the second processor core, and recording a correspondence between the storage address of the to-be-processed data and an identifier of the second processor core in the data storage table.

4. The data processing method according to claim 1, wherein the determining, by the first processor core, the second processor core, wherein the second processor core corresponds to the storage address of the to-be-processed data specifically comprises:
querying, by the first processor core, a data storage table according to the storage address of the to-be-processed data; and if a correspondence between the storage address of the to-be-processed data and an identifier of the second processor core is found, determining, by the first processor core, the second processor core according to the correspondence; or if a correspondence between the storage address of the to-be-processed data and an identifier of the second processor core is not found, determining, by the first processor core, the second processor core according to a workload parameter of the first processor core and a workload parameter of the second processor core, and recording the correspondence between the storage address of the to-be-processed data and the identifier of the second processor core in the data storage table.

5. The data processing method according to claim 3 or 4, wherein the correspondence between the storage address of the to-be-processed data and the identifier of the second processor core is deleted from the data storage table if the workload parameter of the second processor core exceeds a preset threshold.

6. The data processing method according to any one of claims 1 to 5, wherein after the sending, by the first processor core, the processing operation identifier and the storage address of the to-be-processed data to the second processor core, the method further comprises:
obtaining, by the second processor core, the processing operation identifier and the storage address of the to-be-processed data, determining a processing operation according to the processing operation identifier, and obtaining the to-be-processed data according to the storage address of the to-be-processed data; and
processing, by the second processor, the to-be-processed data according to the processing operation.

7. A data processing apparatus, comprising:
an obtaining unit, configured to obtain a data processing task, wherein the data processing task comprises a processing operation identifier and a storage address of to-be-processed data;
a determining unit, configured to determine a processor core, wherein the processor core corresponds to the storage address of the to-be-processed data; and
a sending unit, configured to send the processing operation identifier and the storage address of the to-be-processed data to the processor core.

8. The data processing apparatus according to claim 7, wherein the determining unit is specifically configured to query a data storage table according to the storage address of the to-be-processed data to determine the processor core, wherein the data storage table comprises a correspondence between the storage address of the to-be-processed data and an identifier of the processor core.

9. The data processing apparatus according to claim 7, wherein the determining unit is further configured to determine the processor core according to a workload parameter of the data processing apparatus and a workload parameter of the processor core and record a correspondence between the storage address of the to-be-processed data and an identifier of the processor core in the data storage table.

10. The data processing apparatus according to claim 7, wherein the determining unit is further configured to query a data storage table according to the storage address of the to-be-processed data; and if a correspondence between the storage address of the to-be-processed data and an identifier of the processor core is found, determine the processor core according to the correspondence; or if a correspondence between the storage address of the to-be-processed data and an identifier of the processor core is not found, determine the processor core according to a workload parameter of the data processing apparatus and a workload parameter of the processor core, and record the correspondence between the storage address of the to-be-processed data and the identifier of the processor core in the data storage table.

11. The data processing apparatus according to claim 9 or 10, wherein the data processing apparatus further comprises a deleting unit, wherein the deleting unit is configured to delete the correspondence, recorded in the data storage table, between the storage address of the to-be-processed data and the identifier of the processor core if the workload parameter of the processor core exceeds a preset threshold.

12. A multi-core processor chip, wherein the multi-core processor chip comprises at least a first processor core and a second processor core, and the first processor core is in communication connection with the second processor core, wherein
the first processor core is configured to: obtain a data processing task, wherein the data processing task comprises a processing operation identifier and a storage address of to-be-processed data; determine the second processor core, wherein the second processor core corresponds to the storage address of the to-be-processed data; and send the processing operation identifier and the storage address of the to-be-processed data to the second processor core; and
the second processor core is configured to obtain the processing operation identifier and the storage address of the to-be-processed data, determine a processing operation according to the processing operation identifier, obtain the to-be-processed data according to the storage address of the to-be-processed data, and process the to-be-processed data according to the processing operation.

13. The multi-core processor chip according to claim 12, wherein the multi-core processor chip further comprises a memory, wherein the memory is configured to store a data storage table, and the memory is in communication connection with the first processor core and the second processor core; and
that the first processor core determines the second processor core, wherein the second processor core corresponds to the storage address of the to-be-processed data specifically comprises:
querying, by the first processor core, the data storage table according to the storage address of the to-be-processed data to determine the second processor core, wherein the data storage table comprises a correspondence between the storage address of the to-be-processed data and an identifier of the second processor core.

14. The multi-core processor chip according to claim 12, wherein the multi-core processor chip further comprises a memory, wherein the memory is configured to store a data storage table, and the memory is in communication connection with the first processor core and the second processor core; and
that the first processor core determines the second processor core, wherein the second processor core corresponds to the storage address of the to-be-processed data specifically comprises:
determining, by the first processor core, the second processor core according to a workload parameter of the first processor core and a workload parameter of the second processor core, and recording a correspondence between the storage address of the to-be-processed data and an identifier of the second processor core in the data storage table.

15. The multi-core processor chip according to claim 12, wherein the multi-core processor chip further comprises a memory, wherein the memory is configured to store a data storage table, and the memory is in communication connection with the first processor core and the second processor core; and
that the first processor core determines the second processor core, wherein the second processor core corresponds to the storage address of the to-be-processed data specifically comprises:
querying, by the first processor core, the data storage table according to the storage address of the to-be-processed data; and if a correspondence between the storage address of the to-be-processed data and an identifier of the second processor core is found, determining, by the first processor core, the second processor core according to the correspondence; or if a correspondence between the storage address of the to-be-processed data and an identifier of the second processor core is not found, determining, by the first processor core, the second processor core according to a workload parameter of the first processor core and a workload parameter of the second processor core, and recording the correspondence between the storage address of the to-be-processed data and the identifier of the second processor core in the data storage table.

16. The multi-core processor chip according to claim 14 or 15, wherein the second processor core is further configured to delete the correspondence between the second processor core and the storage address of the to-be-processed data from the data storage table if the workload parameter of the second processor core exceeds a preset threshold.

17. A computer system, wherein the computer system comprises:
the multi-core processor chip according to any one of claims 12 to 16, a memory, a communications interface, and a bus, wherein the multi-core processor chip, the memory, and the communications interface are connected by using the bus.
